# EUROPEAN PATENT SPECIFICATION

(11) **EP 4 557 061 B1**
(45) Date of publication and mention of the grant of the patent: **09.09.2026**
(21) Application number: 23857538.5
(22) Date of filing: 03.07.2023
(51) Int. Cl.: G06F 3/0354, G06F 1/16

(54) **ELECTRONIC DEVICE COMPRISING TOUCH PAD**
ELEKTRONISCHE VORRICHTUNG MIT BERÜHRUNGSFELD
DISPOSITIF ÉLECTRONIQUE COMPRENANT UN PAVÉ TACTILE

(30) Priority: 26.08.2022 KR 20220107535; 05.09.2022 KR 20220112315
(43) Date of publication of application: 21.05.2025
(73) Proprietor: Samsung Electronics Co., Ltd., Suwon-si, Gyeonggi-do 16677 (KR)
(72) Inventor: LEE, Choongyoun, Suwon-si, Gyeonggi-do 16677 (KR); HWANG, Seongyu, Suwon-si, Gyeonggi-do 16677 (KR)
(74) Representative: Gulde & Partner
(86) International application number: PCT/KR2023/009327
(87) International publication number: WO 2024/043500

(56) References cited:
- CN-A- 112 241 214
- JP-A- 2013 008 123
- KR-A- 20140 129 812
- KR-A- 20160 061 180
- KR-A- 20220 069 639
- US-A1- 2018 232 072

## Description

### [Technical Field]

The disclosure relates to an electronic device including a touch pad.

### [Background Art]

With the development of information and communication technology and semiconductor technology, various functions are packed in one portable electronic device. For example, an electronic device may implement not only communication functions but also entertainment functions, such as playing games, multimedia functions, such as playing music and videos, communication and security functions for mobile banking, and scheduling and e-wallet functions. These electronic devices have been downsized to be conveniently carried by users.

US 2018/232072 A1 discloses a touch pad adjacent an edge of an opening defined by a housing of an electronic device and a bracket to secure a first side of the touch pad to the housing adjacent the edge. It further includes an adjustment mechanism to selectively move a first corner and a second corner of the touch pad that are opposite the first side in either a direction toward or away from a front surface of the housing so that the first and second corners are substantially flush will the adjacent edge.

### [Detailed Description of the Invention]

### [Technical Solution]

The invention is set out in the appended set of claims. According to an embodiment of the disclosure, an electronic device comprises a housing and a touch pad module accommodated in the housing. The touch pad module includes a touch pad cover, a printed circuit board disposed under the touch pad cover, an adjustment screw at least partially inserted in the housing, a touch pad bracket disposed on the housing, including a main area spaced apart from the printed circuit board and an end area extending from the main area and configured to contact the printed circuit board, and wherein the end area is configured to be bent with respect to the main area based on a movement of the adjustment screw, and an adhesive member positioned between the printed circuit board and the main area of the touch pad bracket.

According to an aspect of the disclosure, an electronic device may comprise a housing including a first housing including a through hole and a second housing configured to rotate with respect to the first housing, a touch pad module accommodated in the first housing, and a display accommodated in the second housing. The touch pad module may include a touch pad cover, a printed circuit board disposed under the touch pad cover, an adjustment screw at least partially positioned in the through hole, and a touch pad bracket disposed on the first housing and configured to be bent based on a movement of the adjustment screw. The touch pad bracket may include a main area spaced apart from the printed circuit board and an end area configured to contact the printed circuit board based on a movement of the adjustment screw.

### [Brief Description of the Drawings]

FIG. 1 is a block diagram illustrating an electronic device in a network environment according to an embodiment of the disclosure;
FIG. 2 is a front perspective view illustrating an electronic device according to an embodiment of the disclosure;
FIG. 3 is an exploded perspective view illustrating an electronic device including a touch pad module according to an embodiment of the disclosure;
FIG. 4 is a perspective view illustrating an electronic device including a projected touch pad module according to an embodiment of the disclosure;
FIG. 5 is a top view illustrating an electronic device including a projected touch pad module according to an embodiment of the disclosure;
FIG. 6A is a cross-sectional view taken along line A-A' of FIG. 5 according to an embodiment of the disclosure;
FIG. 6B is a cross-sectional view taken along line A-A' of FIG. 5 according to an embodiment of the disclosure;
FIG. 7 is a cross-sectional view taken along line B-B' of FIG. 5 according to an embodiment of the disclosure;
FIG. 8A is a perspective view illustrating an electronic device including an adjustment screw and a touch pad bracket according to an embodiment of the disclosure;
FIG. 8B is a perspective view illustrating an electronic device including an adjustment screw and a touch pad bracket according to an embodiment of the disclosure; and
FIG. 8C is a perspective view illustrating an electronic device including an adjustment screw and a touch pad bracket according to an embodiment of the disclosure.

### [Mode for Carrying out the Invention]

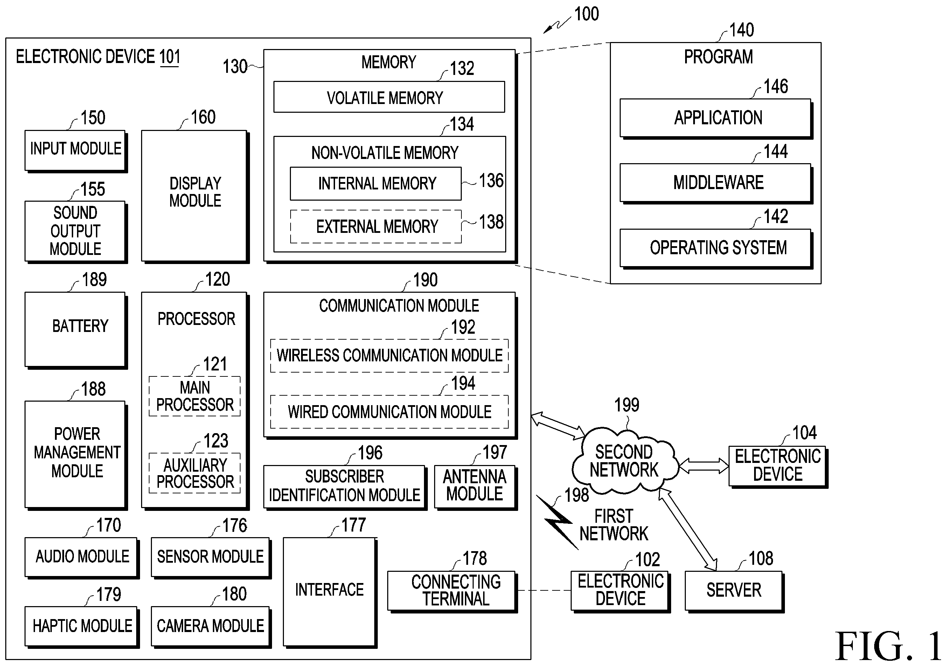

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

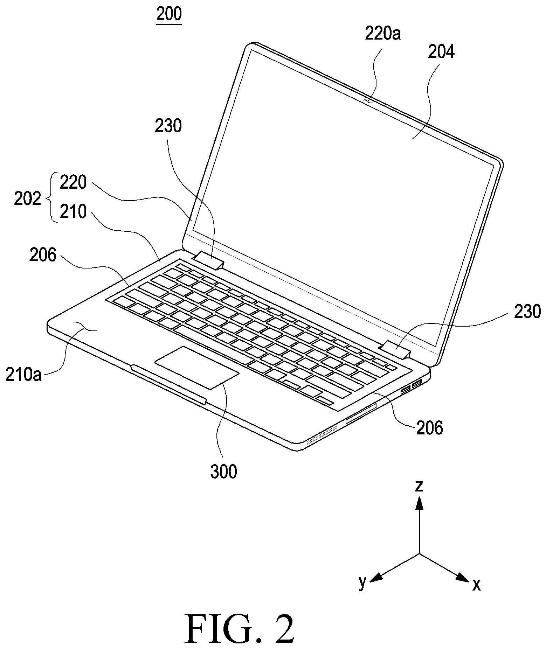

FIG. 2 is a front perspective view illustrating an electronic device according to an embodiment of the disclosure.

Referring to FIG. 2, an electronic device 101 may include a housing 202, a display 204, and a touch pad module 300. According to an embodiment, the electronic device 101 may be a laptop computer, a notebook computer, or a portable terminal. The configuration of the electronic device 101 of FIG. 2 may be identical in whole or part to the configuration of the electronic device 101 of FIG. 1.

According to an embodiment, the housing 202 may form at least a portion of the exterior of the electronic device 101 or support a component (e.g., the touch pad module 300) of the electronic device 101. For example, the housing 202 may receive at least one of the display 204, the input device 206, or the touch pad module 300.

According to an embodiment, the electronic device 101 may be opened or closed. For example, the housing 202 may include a first housing 210 and a second housing 220 connected to be rotatable with respect to the first housing 210. According to an embodiment, the electronic device 101 may include a hinge module 230 connected to the housing 202. For example, the hinge module 230 may be connected to the first housing 210 and the second housing 220. According to an embodiment, the first housing 210 may be configured to rotate by a designated angle (e.g., 0 degrees to 180 degrees) with respect to the second housing 220. For example, a first front surface 210a of the first housing 210 may face a second front surface 220a of the second housing 220.

According to an embodiment, the housing 202 may be formed of a metallic material or a non-metallic material having a selected magnitude of rigidity. According to an embodiment, at least a portion of the electronic device 101 formed of the metallic material may provide a ground plane and may be electrically connected to a ground line formed on a printed circuit board (not shown). For example, the housing 202 may be electrically connected to the printed circuit board through a capacitive component.

According to an embodiment, the display 204 may be a flexible display in which at least a partial area thereof may be deformed into a flat surface and/or a curved surface. For example, the display 204 may be a foldable or rollable display. The configuration of the display 204 may be identical in whole or part to the configuration of the display module 160 of FIG. 1. According to an embodiment, at least a portion of the display 204 may be disposed in the second housing 220. For example, at least a portion of the display 204 may be visually exposed to the outside of the electronic device 101 through the second housing 220. The display 204 may form at least a portion of a second front surface 220a of the second housing 220.

According to an embodiment, the display 204 may be coupled with or disposed adjacent to a touch detection circuit, a pressure sensor capable of measuring the strength (pressure) of touches, and/or a digitizer for detecting a magnetic field-type stylus pen.

According to an embodiment, the input device 206 may detect a user input (e.g., pressure). According to an embodiment, the input device 206 may be disposed on or accommodated in the first housing 210. According to an embodiment, in the closed state of the electronic device 101, the input device 206 may face the display 204. The configuration of the input device 206 of FIG. 2 may be identical in whole or part to the configuration of the input module 150 of FIG. 1. For example, the input device 206 may be a keyboard.

According to an embodiment, the touch pad module 300 may be configured to detect or receive a user input. According to an embodiment, the touch pad module 300 may include a capacitive touch sensor, a touch sensor based on resistance detection, an optical touch sensor, or a surface sound wave touch sensor. For example, the touch pad module 300 detects current, pressure, light, and/or vibration due to the input applied by the user to the touch pad module 300, and the processor (e.g., processor 120 of FIG. 1) and/or the touch pad module 300 may determine the user input based on a change in the detected current, pressure, light, and/or vibration. According to an embodiment, the touch pad module 300 may be referred to as a touch pad, a touch pad device, or a touch pad structure.

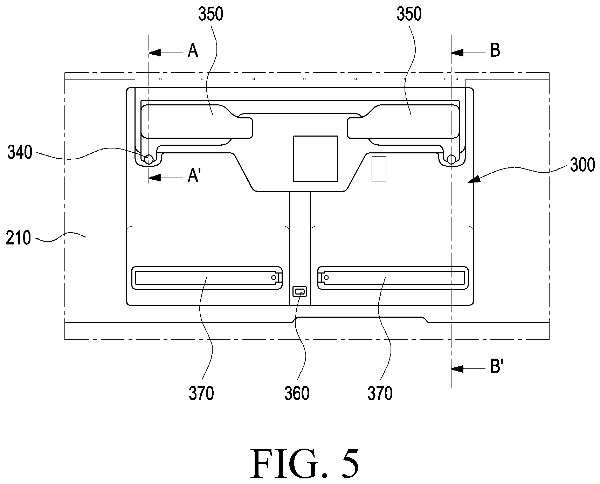

According to an embodiment, the processor 120 and/or the touch pad module 300 may determine the position (e.g., XY coordinates) of the user's input. According to an embodiment, the touch pad module 300 may detect pressure on the touch pad module 300. For example, the touch pad module 300 may detect a force in the thickness direction (e.g., Z-axis direction) using a switch (e.g., the switch 360 of FIG. 5) and at least one force sensor (not shown). According to an embodiment, the touch pad module 300 may detect an external object when the external object (e.g., the user's finger or a stylus) directly contacts or is close to the surface of the touch pad module 300.

According to an embodiment, the touch pad module 300 may be accommodated in the housing 202. For example, the touch pad module 300 may be connected to the first housing 210, and at least a portion of the touch pad module 300 may be exposed to the outside of the first housing 210. According to an embodiment, the touch pad module 300 may be adjacent to the input device 206. According to an embodiment, in the closed state of the electronic device 101, at least a portion of the touch pad module 300 may face the display 204. The configuration of the touch pad module 300 may be identical in whole or part to the configuration of the input module 150 of FIG. 1.

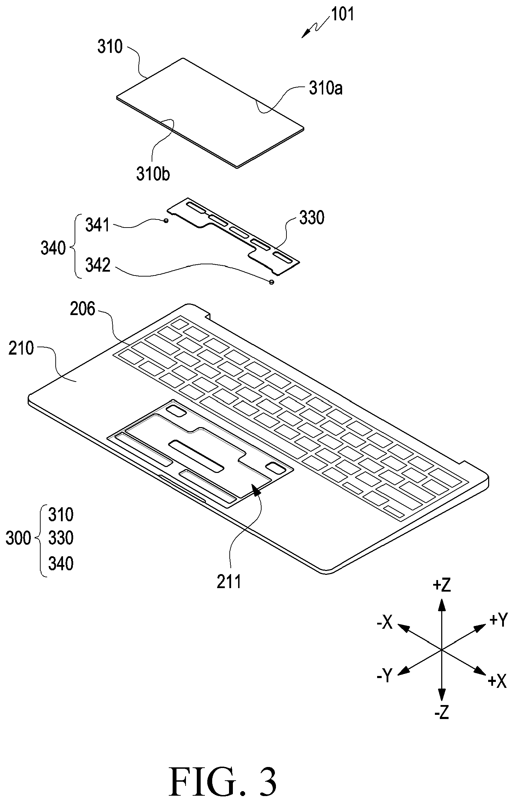

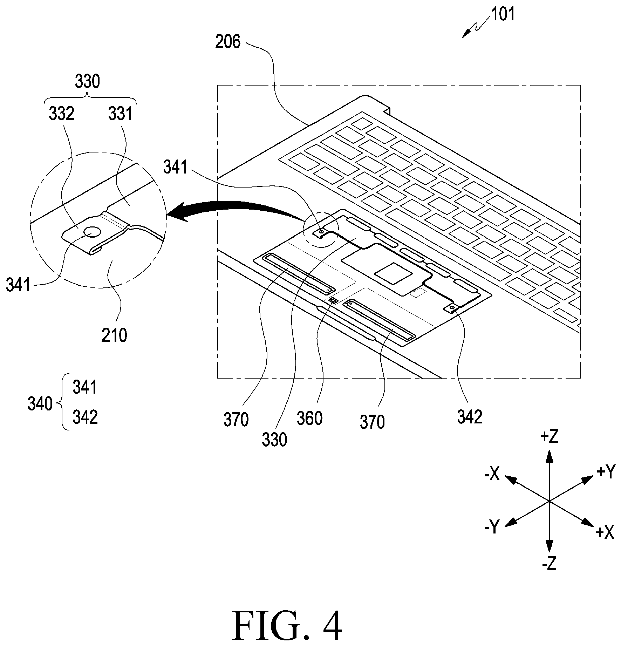

FIG. 3 is an exploded perspective view illustrating an electronic device including a touch pad module according to an embodiment of the disclosure. FIG. 4 is a perspective view illustrating an electronic device including a projected touch pad module according to an embodiment of the disclosure.

Referring to FIG. 3 and/or 4, the electronic device 101 may include a first housing 210 and a touch pad module 300. The configuration of the first housing 210 and the touch pad module 300 of FIG. 3 and/or 4 may be identical in whole or part to the configuration of the first housing 210 and the touch pad module 300 of FIG. 2.

According to an embodiment, the touch pad module 300 may include a touch pad cover 310. The touch pad cover 310 may form at least a portion of the exterior of the touch pad module 300. For example, the touch pad cover 310 may be disposed on the first housing 210 and may form at least a portion of the exterior of the electronic device 101. According to an embodiment, the first housing 210 may include an receiving recess 211 for receiving at least a portion of the touch pad module 300. At least a portion of the touch pad module 300 may be positioned in the receiving recess 211. The touch pad cover 310 may contact the user's body (e.g., a finger). The touch pad cover 310 may be referred to as an uppermost layer of the touch pad module 300. According to an embodiment, the touch pad cover 310 may include an insulating layer (not shown). For example, the touch pad cover 310 may include at least one of glass, resin, or ceramic. According to an embodiment, the touch pad cover 310 may include a substantially opaque anti-visibility layer (not shown). The anti-visibility layer may reduce or prevent the internal component (e.g., the printed circuit board 320) of the touch pad module 300 from being visually exposed to the outside of the electronic device 101. According to an embodiment, the touch pad cover 310 may have a substantially rectangular shape. The touch pad cover 310 may include a first edge area 310a facing the input device 206 and a second edge area 310b opposite to the first edge area 310a.

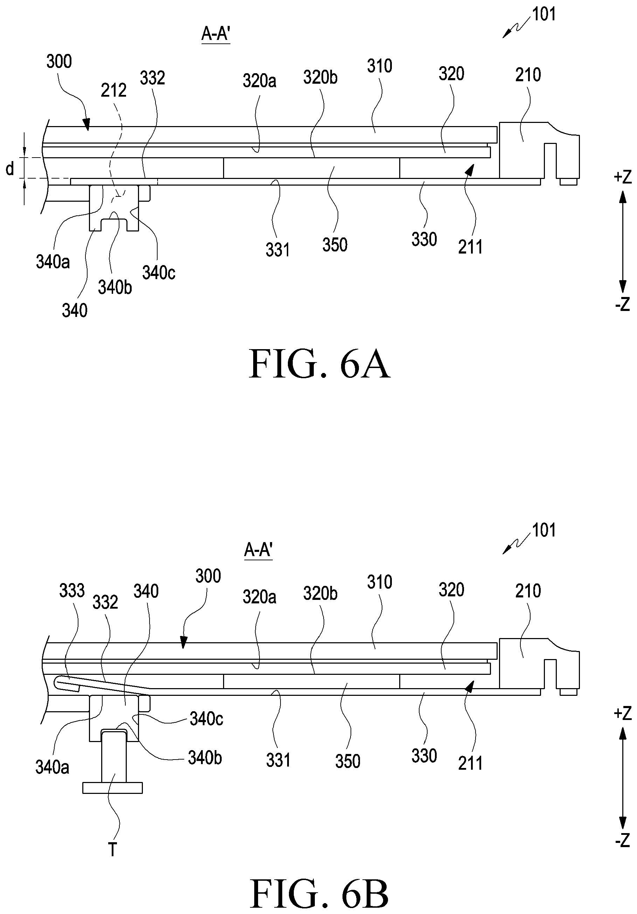

According to an embodiment, the touch pad module 300 may include a printed circuit board (e.g., the printed circuit board 320 of FIG. 6A). The printed circuit board 320 may include an electronic component (e.g., a touch sensor (not shown) and/or a pressure sensor (not shown) for detecting the user input. According to an embodiment, the touch sensor may be formed as an array of conductive capacitor electrodes for forming an X-Y capacitive touch sensor. According to an embodiment, the printed circuit board 320 may be disposed under the touch pad cover 310 (-Z). For example, the printed circuit board 320 may be attached to the touch pad cover 310 using an adhesive. In FIGS. 3 and 4, the printed circuit board 320 is illustrated as being in a state of being attached under the touch pad cover 310, and the printed circuit board 320 may be omitted.

According to an embodiment, the touch pad module 300 may include a switch 360. The electronic device 101 may perform a button operation using the switch 360. For example, when the user provides force to the touch pad cover 310 of the touch pad module 300, the switch 360 may move in the second direction (e.g., -Z direction) and come into contact with a case or a separate contact member (e.g., a supporting member). The processor (e.g., the processor 120 of FIG. 1) may obtain an electrical signal generated based on a force applied to the switch 360. According to an embodiment, the switch 360 may be electrically connected to the printed circuit board 320. The switch 360 may be disposed under the printed circuit board 320. For example, the switch 360 may be disposed on the second printed circuit board surface (e.g., the second printed circuit board surface 320b of FIG. 6b). According to an embodiment, the switch 360 may be referred to as a dome switch or a contact switch.

According to an embodiment, the touch pad module 300 may include a touch pad bracket 330. The touch pad bracket 330 may reduce sagging of the touch pad module 300. For example, the touch pad bracket 330 may be bent based on the movement of the adjustment screw 340. The bent touch pad bracket 330 may support the touch pad cover 310 and/or the printed circuit board 320. According to an embodiment, the touch pad bracket 330 may be referred to as a tension bracket or a tension supporting member.

According to an embodiment, the touch pad bracket 330 may include a main area 331 and an end area 332 extending from the main area 331. The main area 331 may be connected to or attached to the first housing 210. For example, the main area 331 may be disposed on the first housing 210. The main area 331 may be spaced apart from the printed circuit board 320 by a designated distance d. The end area 332 may face or contact the adjustment screw 340. For example, when the adjustment screw 340 moves in the thickness direction (e.g., +Z direction) of the electronic device 101, at least a portion of the end area 332 may be bent by a force received from the adjustment screw 340. The bent end area 332 may contact the touch pad cover 310 or the printed circuit board 320 and may support the touch pad cover 310 and/or the printed circuit board 320. As the end area 332 contacts the touch pad cover 310 or the printed circuit board 320, sagging of the touch pad module 300 may be reduced.

According to an embodiment, the touch pad bracket 330 may be disposed on the housing (e.g., the first housing 210). For example, the touch pad bracket 330 may be positioned between the first housing 210 and the printed circuit board 320.

According to an embodiment, the touch pad module 300 may include an adjustment screw 340 for adjusting or changing the position of the touch pad module 300. For example, the adjustment screw 340 may change the shape of the touch pad bracket 330. As the shape of the touch pad bracket 330 is changed, sagging of the touch pad module 300 may be reduced. According to an embodiment, the adjustment screw 340 may be accommodated in the first housing 210. For example, the adjustment screw 340 may be disposed in a through hole (e.g., the through hole 212 of FIG. 6A) of the first housing 210. In the disclosure, the adjustment screw 340 is referred to as a component of the touch pad module 300, but it is optional. For example, the adjustment screw 340 may be referred to as a component included in the electronic device 101 or the first housing 210. According to an embodiment, the adjustment screw 340 may face at least a portion of an end portion (e.g., the second edge area 310b) of the touch pad cover 310.

According to an embodiment, the adjustment screw 340 may include a plurality of adjustment screws 341 and 342 spaced apart from each other. For example, the adjustment screw 340 may include a first adjustment screw 341 positioned on the left side (e.g., -X direction) of the electronic device 101 and a second adjustment screw 342 positioned on the right side (e.g., +X direction) of the electronic device 101.

According to an embodiment, the touch pad module 300 may include a supporting member 370. According to an embodiment, the supporting member 370 may support the touch pad cover 310 and/or the printed circuit board 320. For example, the supporting member 370 may be positioned under the second edge area 310b of the touch pad cover 310 (in the -Z direction). The supporting member 370 may be positioned between the first housing 210 and the printed circuit board 320. According to an embodiment, the supporting member 370 may be referred to as a supporting bracket. The supporting member 370 may be disposed on the receiving recess 211 of the first housing 210.

The structures (e.g., the touch pad cover 310, the touch pad bracket 330, the adjustment screw 340, the switch 360, and the supporting member 370) of the electronic device 101 disclosed in FIG. 3 and/or 4 may be applied to the touch pad module 300 of FIG. 2.

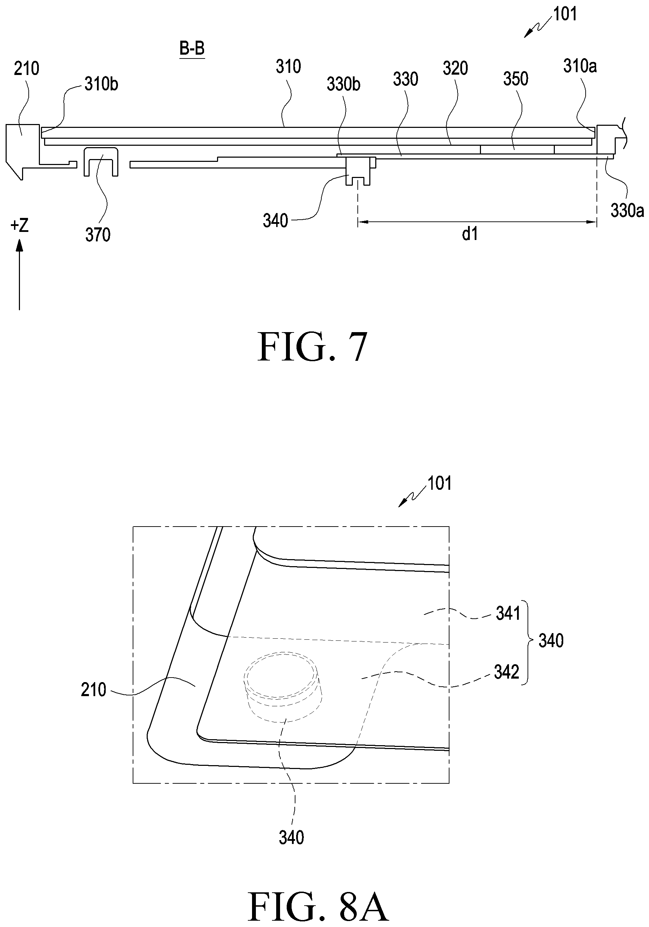

FIG. 5 is a top view illustrating an electronic device including a projected touch pad module according to an embodiment of the disclosure. FIGS. 6A and 6B are cross-sectional views taken along line A-A' of FIG. 5 according to an embodiment of the disclosure. FIG. 7 is a cross-sectional view taken along line B-B' of FIG. 5 according to an embodiment of the disclosure.

Referring to FIG. 5, 6A, 6B and/or 7, the electronic device 101 may include a first housing 210 and a touch pad module 300. The touch pad module 300 may include a touch pad cover 310, a printed circuit board 320, a touch pad bracket 330, an adjustment screw 340, and/or an adhesive member 350. The configuration of the first housing 210 and the touch pad module 300 of FIG. 5, 6A and/or 6B may be identical in whole or part to the configuration of the first housing 210 and the touch pad module 300 of FIG. 3 and/or 4.

According to an embodiment, at least a portion of the touch pad module 300 may be positioned in the receiving recess 211 of the first housing 210. The outer surface 310a of the touch pad cover 310 may be positioned on substantially the same plane as the first front surface 210a of the first housing 210.

According to an embodiment, the first housing 210 may include at least one through hole 212 for receiving at least a portion of the adjustment screw 340. The through hole 212 may be referred to as an empty space extending from the receiving recess 211. According to an embodiment, the through hole 212 may be exposed to the outside of the electronic device 101. According to an embodiment, the through hole 212 may not be exposed to the outside of the electronic device 101. For example, the through hole 212 may be disposed inside the electronic device 101. According to an embodiment, the electronic device 101 may include a cover (not shown) configured to cover at least a portion of the through hole 212. According to an embodiment, the number of through holes 212 formed may correspond to the number of adjustment screws 340. According to an embodiment, the through hole 212 may include a screw line for adjusting the position of the adjustment screw 340.

According to an embodiment, the printed circuit board 320 may include a first printed circuit board surface 320a facing the touch pad cover 310 and a second printed circuit board surface 320b opposite to the first printed circuit board surface 320a. The printed circuit board 320 may be attached to the touch pad cover 310 and integrally assembled.

According to an embodiment, the touch pad bracket 330 may include a main area 331 and an end area 332. According to an embodiment, the touch pad bracket 330 may be connected to the printed circuit board 320 using the adhesive member 350. For example, the adhesive member 350 may be attached to at least a portion of the main area 331 of the touch pad bracket 330. According to one embodiment, when a force is applied to the end area 332 by the adjustment screw 340, the end area 332 may be bent with respect to the main area 331.

Referring to FIG. 6B, the end area 332 may be formed in a shape for reducing the force applied to the printed circuit board 320. According to an embodiment, the end area 332 may include a bending portion 333 at least partially bent. For example, at least a portion of the end area 332 is bent through a hemming process, and the bent end area 332 may be referred to as a bending portion. According to an embodiment, at least a portion of the end area 332 may be processed into a curved surface. According to an embodiment, at least a portion of the end area 332 may have a chamfered shape.

According to an embodiment, the position of the adjustment screw 340 may be changed by the user's input. The user's input may be the transmission of a force to the adjustment screw 340 of the electronic device 101 using a repair tool T. For example, the repair tool T may rotate the adjustment screw 340 through the through hole 212. According to an embodiment, the repair tool T may be a screw driver.

According to an embodiment, the adjustment screw 340 may include an upper surface 340a facing the touch pad cover 310 or a portion (e.g., the second printed circuit board surface 320b) of the printed circuit board 320, and a lower surface 340b opposite to the upper surface 340a. When the adjustment screw 340 is moved in the first direction (+Z direction) by the repair tool (T),

The lower surface 340b may be visually exposed to the outside of the electronic device 101. The lower surface 340b may include a recess for receiving the repair tool T. According to an embodiment, the adjustment screw 340 may include a side surface 340c surrounding at least a portion between the upper surface 340a and the lower surface 340b. The side surface 340c may include a screw line facing a screw line of the first housing 210 forming the through hole 212.

According to an embodiment, in the manufacturing process of the electronic device 101, the producer may check the quality of the electronic device 101 and/or the touch pad module 300. For example, when the touch force F or repulsive force of the touch pad module 300 is more or less than a designated range, the producer may change the repulsive force and/or click force of the touch pad module 300 by moving and/or rotating the adjustment screw 340 using the repair tool T.

According to an embodiment, when repairing the electronic device 101, the repairman may change the repulsive force and/or click force of the touch pad module 300 by moving and/or rotating the adjustment screw 340 using the repair tool T.

According to an embodiment, the adhesive member 350 may connect the touch pad cover 310 and the printed circuit board 320 to the touch pad bracket 330. For example, the adhesive member 350 may be positioned between the printed circuit board 320 and the touch pad bracket 330. The adhesive member 350 may be positioned between the printed circuit board 320 and the main area 331. According to an embodiment, the adhesive member 350 may be referred to as an adhesive tape. The adhesive member 350 may be a double-sided tape.

According to an embodiment, the click force F of the touch pad module 300 may be determined based on the position of the touch pad bracket 330 and/or the adjustment screw 340. The click force F may be a force of the touch pad module 300 that repels the user's input (e.g., a click by a finger). The click force F may be provided in the second edge area 310b of the touch pad cover 310. According to an embodiment, the thickness of the touch pad bracket 330 may be changed based on the click force F required by the touch pad module 300.

The touch pad bracket 330 may include a first end portion 330a connected to the first housing 210 and a second end portion 330b opposite to the first end portion 330b. The second end portion 330b may be a portion of the touch pad bracket 330 that contacts the adjustment screw 340. For example, the second end portion 330b may be an end area (e.g., the end area 332 of FIG. 6A and/or FIG. 6B). The magnitude of the click force F may be changed based on a first distance d1 between the first end portion 330a and the second end portion 330b. According to an embodiment, the first distance d1 may be 30 mm. The click force F may be a 150 gram force (gf) to 200 gram force. The first distance d1 may be selectively designed based on the size and/or weight of the touch pad module 300. For example, in an embodiment, the first distance d1 may be 50 mm, and the click force F may be 230 to 340 gram force. In an embodiment, the first distance d1 may be 80 mm, and the click force F may be 400 to 500 gram force.

According to an embodiment, the touch pad bracket 330 may be formed of a material having elasticity. According to an embodiment, the touch pad bracket 330 may be formed of metal (e.g., stainless steel and/or aluminum). According to an embodiment, the touch pad bracket 330 may be formed of a non-metallic material. For example, the touch pad bracket 330 may be formed of a resin (e.g., polyethylene (PE), polypropylene (PP), Acrylonitrile-Butadiene-Styrene (ABS), polystyrene (PS) and/or polyamide (PA). According to an embodiment, the touch pad bracket 330 may include polycarbonate (PC) and/or glass fiber.

The structures (e.g., the touch pad cover 310, the printed circuit board 320, the touch pad bracket 330, the adjustment screw 340, and the adhesive member 350) of the electronic device 101 disclosed in FIG. 5, 6A and/or 6B may be applied to the touch pad module 300 of FIG. 2 and/or 3.

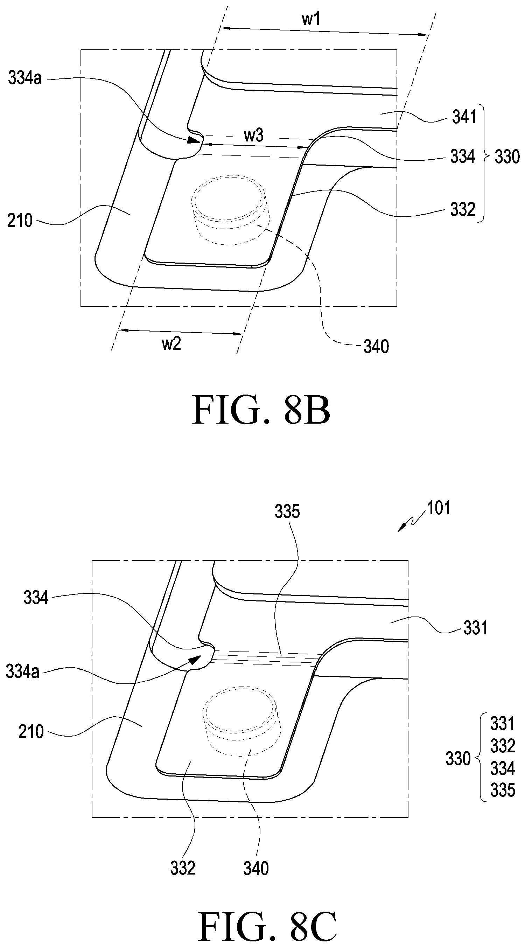

FIG. 8A is a perspective view illustrating an electronic device including an adjustment screw and a touch pad bracket according to an embodiment of the disclosure. FIG. 8B is a perspective view illustrating an electronic device including an adjustment screw and a touch pad bracket according to an embodiment of the disclosure, and FIG. 8C is a perspective view illustrating an electronic device including an adjustment screw and a touch pad bracket according to an embodiment of the disclosure.

Referring to FIG. 8A, FIG. 8B and/or FIG. 8C, the electronic device 101 may include a first housing 210, a touch pad bracket 330, and an adjustment screw 340. The configuration of the first housing 210, the touch pad bracket 330, and the adjustment screw 340 of FIGS. 8A, 8B, and 8C may be identical in whole or part to the configuration of the first housing 210, the touch pad bracket 330, and the adjustment screw 340 of FIG. 4A.

According to an embodiment, the magnitude of the force provided by the touch pad bracket 330 to the touch pad cover (e.g., the touch pad cover 310 of FIG. 6A) or the printed circuit board 320) may be changed based on the shape of the touch pad bracket 330. The shape of the touch pad bracket 330 may be selectively designed based on a required repulsive force or an internal design of the electronic device 101. For example, as the size of an area (e.g., the end area 332) of the touch pad bracket 330 moved by the adjustment screw 340 increases, the magnitude of the force that the touch pad bracket 330 provides to the touch pad cover 310 and/or the printed circuit board 320 may increase. The force (e.g., supporting force) applied by the touch pad bracket 330 to the touch pad cover 310 and/or the printed circuit board may be proportional to the insertion force for moving the adjustment screw 340.

Referring to FIG. 8A, the touch pad bracket 330 may have a substantially flat plate shape. For example, the main area 331 and the end area 332 may be integrated plates having a substantially rectangular shape. According to an embodiment, the width of the end area 332 of the touch pad bracket 330 may be substantially the same as the width of the main area 331. According to an embodiment, the touch pad bracket 330 may be referred to as a horizontal bracket.

Referring to FIG. 8B, the touch pad bracket 330 may be an intensity reduction bracket. For example, the touch pad bracket 330 may include a main area 331 and an end area 332 extending from the main area 331. The second width w2 of the end area 332 of the touch pad bracket 330 may be shorter than the first width w1 of the main area 331. According to an embodiment, the touch pad bracket 330 may include a connection area 334 including a recess 334a. The connection area 334 may be referred to as a portion of the touch pad bracket 330 positioned between the main area 331 and the end area 332. The recess 334a may be formed in at least a portion of the connection area 334. The third width w3 of the connection area 334 may be shorter than the first width w1 of the main area 331 or the second width w2 of the end area 332. Flexibility of the touch pad bracket 330 may be increased due to the structure of the connection area 334. As the flexibility of the touch pad bracket 330 is increased, the supporting force of the touch pad cover 310 and/or the printed circuit board by the touch pad bracket 330 may be reduced.

Referring to FIG. 8C, the touch pad bracket 330 may include at least one uneven pattern 335 for adjusting the flexibility and/or supporting force of the touch pad bracket 330. According to an embodiment, at least one uneven pattern 335 may be referred to as at least one recess or rib structure formed on the upper or lower surface of the end area 332. Due to the uneven pattern 335, the supporting force of the touch pad cover 310 and/or the printed circuit board by the touch pad bracket 330 may be increased.

According to an embodiment, the structure of the touch pad bracket 330 may be selective. For example, the pad bracket 330 of FIG. 8A, the touch pad bracket 330 of FIG. 8B, or the touch pad bracket 330 of FIG. 8C may be selectively or together applied to one electronic device 101.

The structures (e.g., the first housing 210, the touch pad bracket 330, and the adjustment screw 340) of the electronic device 101 disclosed in FIG. 8A, 8B and/or 8C may be applied to the touch pad module 300 of FIG. 2, 3, 5, 6A and/or 6B.

The electronic device (e.g., a laptop computer) may include a touch pad for receiving the user input. However, due to the load of the touch pad, a difference in height between the touch pad and the housing may occur. As the edge of the touch pad sags by the load of the touch pad before the switch is operated, the switch may not be operated.

Further, as the touch pad is connected to the components of the electronic device, it may be necessary to disassemble the electronic device or replace the touch pad module when the touch pad is defective.

According to an embodiment of the disclosure, there may be provided an electronic device that has an enhanced click feel and a mitigated step between the touch pad module and the housing and an increased ease of repair using the touch pad bracket supporting at least a portion of the touch pad based on a movement of the adjustment screw.

The disclosure is not limited to the foregoing embodiments but various modifications or changes may rather be made thereto without departing from the scope of the disclosure.

According to an embodiment of the disclosure, an electronic device (e.g., the electronic device 101 of FIG. 2) may comprise a housing (e.g., the housing 202 of FIG. 2) and a touch pad module (e.g., the touch pad module 300 of FIG. 2) accommodated in the housing. The touch pad module may include a touch pad cover (e.g., the touch pad cover 310 of FIG. 3), a printed circuit board (e.g., the printed circuit board 320 of FIG. 4) disposed under the touch pad cover, an adjustment screw (340) at least partially inserted in the housing, a touch pad bracket (e.g., the touch pad bracket 330) disposed on the housing, including a main area 331 spaced apart from the printed circuit board and an end area 332 extending from the main area and configured to contact the printed circuit board, wherein the end area is configured to be bent with respect to the main area based on a movement of the adjustment screw, and an adhesive member 350 positioned between the printed circuit board and the main area of the touch pad bracket. As the touch pad bracket is bent, the click feel of the touch pad module may be enhanced. As the repulsive force of the touch pad module is changed by the adjustment screw, repair and ease of manufacture of the electronic device may be enhanced.

According to an embodiment, the end area may include a bending portion (e.g., the bending portion 333 of FIG. 6B), at least a portion of which is bent. As the end area includes the bending portion, damage to the printed circuit board or the electronic components positioned on the printed circuit board may be reduced.

According to an embodiment, the adjustment screw may include an upper surface (e.g., the upper surface 340a of FIG. 7B), at least a portion of which is configured to contact at least a portion of the end area, and a lower surface (e.g., the lower surface 340b of FIG. 7B) facing an outside of the electronic device.

According to an embodiment, the adjustment screw may be configured to move in a thickness direction (e.g., the +Z direction of FIG. 6B) of the electronic device based on a force applied from an outside. The end area may support the printed circuit board and the touch pad cover based on the force received by the adjustment screw.

According to an embodiment, the touch pad bracket may include a first edge area (e.g., the first edge area 310a of FIG. 3) to which the adhesive member is attached and a second edge area (e.g., the second edge area 310b of FIG. 3) positioned opposite to the first edge area and disposed substantially parallel to the first edge area. The adjustment screw may face at least a portion of the second edge area.

According to an embodiment (e.g., FIG. 8A), the touch pad bracket may have a substantially flat plate shape. For example, a width of the main area may be substantially the same as a width of the end area. As the widths of the main area and the end area are substantially the same, the supporting force of the touch pad module by the adjustment screw may be increased.

According to an embodiment, the main area may have a first width (e.g., the first width w1 of FIG. 8B), and the end area may have a second width (e.g., the second width w2 of FIG. 8B) shorter than the first width w1. The end area may be positioned between the adjustment screw and the printed circuit board. The touch pad bracket may include a connection area (e.g., the connection area 324 of FIG. 8B) positioned between the end area and the main area and having a third width (e.g., the third width w3 of FIG. 8B) shorter than the second width of the end area. The repulsive force of the touch pad bracket may be reduced by the connection area.

According to an embodiment, the connection area may include at least one uneven pattern (e.g., the uneven pattern 335 of FIG. 8C). The repulsive force of the touch pad bracket may be increased by the uneven pattern.

According to an embodiment, the housing may include a through hole (e.g., the through hole 212 of FIG. 6B) accommodating at least a portion of the adjustment screw. At least a portion of a lower surface (e.g., the lower surface 340b of FIG. 6A) of the adjustment screw may be exposed to an outside of the electronic device through the through hole.

According to an embodiment, the touch pad bracket may include a metallic material including at least one of stainless steel or aluminum.

According to an embodiment, the touch pad bracket may be manufactured of a non-metallic material including at least one of polyethylene, polypropylene, Acrylonitrile-Butadiene-Styrene, polystyrene and/or polyamide, polycarbonate or glass fiber.

According to an embodiment, the touch pad module may include a switch (e.g., the switch 360 of FIG. 5) disposed under the printed circuit board.

According to an embodiment, the touch pad module may include a supporting member (e.g., the supporting member 370 of FIG. 4) disposed on the first housing and supporting at least one of the touch pad cover or the printed circuit board.

According to an embodiment, the housing may include a first housing (e.g., the first housing 210 of FIG. 2) accommodating the touch pad module and a second housing (e.g., the second housing 220 of FIG. 2) configured to rotate with respect to the first housing and accommodating a display (e.g., the second display 204 of FIG. 2).

According to an embodiment, the adjustment screw may include a plurality of adjustment screws (e.g., the first adjustment screw 341 and the second adjustment screw 342 of FIG. 4) spaced apart from each other.

According to an embodiment of the disclosure, an electronic device (e.g., the electronic device 101 of FIG. 2) may comprise a housing (e.g., the housing 202 of FIG. 2) including a first housing (e.g., the first housing 210 of FIG. 2) including a through hole (e.g., the through hole 212 of FIG. 6A) and a second housing (e.g., the second housing 220 of FIG. 2) configured to rotate with respect to the first housing 210, a touch pad module (e.g., the touch pad module 300 of FIG. 2) accommodated in the first housing 210, and a display (e.g., the display 204 of FIG. 2) accommodated in the second housing 220. The touch pad module may include a touch pad cover (e.g., the touch pad cover 310 of FIG. 3), a printed circuit board (e.g., the printed circuit board 320 of FIG. 6A) disposed under the touch pad cover, an adjustment screw (e.g., the adjustment screw 340 of FIG. 6) at least partially positioned in the through hole, and a touch pad bracket (e.g., the touch pad bracket 330 of FIG. 6A) disposed on the first housing and configured to be bent based on a movement of the adjustment screw. The touch pad bracket may include a main area (e.g., the main area 331 of FIG. 6A) spaced apart from the printed circuit board and an end area (e.g., the end area 332 of FIG. 6A) configured to contact the printed circuit board based on a movement of the adjustment screw.

According to an embodiment, the end area may include a bent bending portion (e.g., the bending portion 333 of FIG. 6B), at least a portion of which is bent.

According to an embodiment, the touch pad module may include an adhesive member (e.g., the adhesive member 350 of FIG. 6A) positioned between the printed circuit board and the main area.

According to an embodiment, the main area may have a first width (e.g., the first width w1 of FIG. 8B), and the end area may have a second width (e.g., the second width w2 of FIG. 8B) shorter than the first width. The end area may be positioned between the adjustment screw and the printed circuit board. The touch pad bracket may include a connection area 324 positioned between the end area and the main area and having a third width w3 shorter than the second width of the end area.

According to an embodiment, the connection area may include at least one uneven pattern 335.

It is apparent to one of ordinary skill in the art that an electronic device including a touch pad according to the disclosure are not limited to the above-described embodiments and those shown in the drawings, and various changes, modifications, or alterations may be made thereto without departing from the scope of the present invention.

## Claims

1. An electronic device (101), comprising:
a housing (202); and
a touch pad module (300) accommodated in the housing,
wherein the touch pad module includes:
a touch pad cover (310);
a printed circuit board (320) disposed under the touch pad cover;
an adjustment screw (340) at least partially inserted in the housing;
a touch pad bracket (330) disposed on the housing, including a main area (331) spaced apart from the printed circuit board and an end area (332) extending from the main area and configured to contact the printed circuit board, wherein the end area is configured to be bent with respect to the main area based on a movement of the adjustment screw to support the printed circuit board and the touch pad cover; and
an adhesive member (350) positioned between the printed circuit board and the main area of the touch pad bracket.

2. The electronic device of claim 1, wherein the end area includes a bending portion (333), at least a portion of which is bent.

3. The electronic device of claim 1 or 2, wherein the adjustment screw includes an upper surface, at least a portion of which is configured to contact at least a portion of the end area, and a lower surface facing an outside of the electronic device.

4. The electronic device of any one of the preceding claims, wherein the adjustment screw is configured to move in a thickness direction of the electronic device based on a force applied from an outside

5. The electronic device of any one of the preceding claims, wherein the touch pad bracket includes a first edge area, to which the adhesive member is attached, and a second edge area positioned opposite to the first edge area and disposed substantially parallel to the first edge area, and
wherein the adjustment screw faces at least a portion of the second edge area.

6. The electronic device of any one of the preceding claims, wherein the touch pad bracket has a substantially flat plate shape.

7. The electronic device of any one of the preceding claims, wherein the main area has a first width (w1), and the end area has a second width (w2) shorter than the first width (w1),
wherein the end area is positioned between the adjustment screw and the printed circuit board, and
wherein the touch pad bracket includes a connection area (334) positioned between the end area and the main area and having a third width (w3) shorter than the second width of the end area.

8. The electronic device of claim 7, wherein the connection area includes at least one uneven pattern (335).

9. The electronic device of any one of the preceding claims, wherein the housing includes a through hole (212) accommodating at least a portion of the adjustment screw, and wherein at least a portion of a lower surface of the adjustment screw is exposed to an outside of the electronic device through the through hole.

10. The electronic device of any one of the preceding claims, wherein the touch pad bracket includes a metallic material including at least one of stainless steel or aluminum.

11. The electronic device of any one of the preceding claims, wherein the touch pad bracket includes a non-metallic material including at least one of polyethylene, polypropylene, Acrylonitrile-Butadiene-Styrene, polystyrene and/or polyamide, polycarbonate or glass fiber.

12. The electronic device of any one of the preceding claims, wherein the touch pad module includes a switch disposed under the printed circuit board.

13. The electronic device of any one of the preceding claims, wherein the touch pad module includes a supporting member disposed on the housing and supporting at least one of the touch pad cover or the printed circuit board.

14. The electronic device of any one of the preceding claims, wherein the housing includes a first housing (210) accommodating the touch pad module and a second housing (220) configured to rotate with respect to the first housing and accommodating a display (204).

15. The electronic device of any one of the preceding claims, wherein the adjustment screw includes a plurality of adjustment screws spaced apart from each other.

## Patentansprüche

1. Elektronische Vorrichtung (101), umfassend:
ein Gehäuse (202); und
ein im Gehäuse untergebrachtes Berührungsfeld-Modul (300),
wobei das Berührungsfeld-Modul Folgendes umfasst:
eine Berührungsfeld-Abdeckung (310);
eine unter der Berührungsfeld-Abdeckung angeordnete Leiterplatte (320);
eine Einstellschraube (340), die zumindest teilweise in das Gehäuse eingesetzt ist;
eine am Gehäuse angeordnete Berührungsfeld-Halterung (330), die einen Hauptbereich (331), der von der Leiterplatte beabstandet ist, und einen Endbereich (332) umfasst, der sich vom Hauptbereich erstreckt und zum Berühren der Leiterplatte konfiguriert ist, wobei der Endbereich so konfiguriert ist, dass er sich basierend auf einer Bewegung der Einstellschraube in Bezug auf den Hauptbereich verbiegt, um die Leiterplatte und die Berührungsfeld-Abdeckung zu stützen; und
ein Klebeelement (350), das zwischen der Leiterplatte und dem Hauptbereich der Berührungsfeld-Halterung positioniert ist.

2. Elektronische Vorrichtung nach Anspruch 1, wobei der Endbereich einen Biegeabschnitt (333) umfasst, von dem zumindest ein Abschnitt gebogen ist.

3. Elektronische Vorrichtung nach Anspruch 1 oder 2, wobei die Einstellschraube eine obere Oberfläche, von der zumindest ein Abschnitt zum Berühren zumindest eines Abschnitts des Endbereichs konfiguriert ist, und eine untere Oberfläche umfasst, die einer Außenseite der elektronischen Vorrichtung zugewandt ist.

4. Elektronische Vorrichtung nach einem der vorstehenden Ansprüche, wobei die Einstellschraube dazu konfiguriert ist, sich basierend auf einer von außen ausgeübten Kraft in einer Dickenrichtung der elektronischen Vorrichtung zu bewegen.

5. Elektronische Vorrichtung nach einem der vorstehenden Ansprüche, wobei die Berührungsfeld-Halterung einen ersten Randbereich, an dem das Klebeelement angebracht ist, und einen zweiten Randbereich umfasst, der dem ersten Randbereich gegenüberliegt und im Wesentlichen parallel zu dem ersten Randbereich angeordnet ist, und
wobei die Einstellschraube mindestens einem Abschnitt des zweiten Randbereichs zugewandt ist.

6. Elektronische Vorrichtung nach einem der vorstehenden Ansprüche, wobei die Berührungsfeld-Halterung eine im Wesentlichen flache Plattenform aufweist.

7. Elektronische Vorrichtung nach einem der vorstehenden Ansprüche, wobei der Hauptbereich eine erste Breite (w1) und der Endbereich eine zweite Breite (w2), die kürzer ist als die erste Breite (w1), aufweist,
wobei der Endbereich zwischen der Einstellschraube und der Leiterplatte positioniert ist, und
wobei die Berührungsfeld-Halterung einen Verbindungsbereich (334) umfasst, der zwischen dem Endbereich und dem Hauptbereich positioniert ist und eine dritte Breite (w3) aufweist, die kleiner ist als die zweite Breite des Endbereichs.

8. Elektronische Vorrichtung nach Anspruch 7,
wobei der Verbindungsbereich mindestens ein unebenes Muster (335) umfasst.

9. Elektronische Vorrichtung nach einem der vorstehenden Ansprüche, wobei das Gehäuse ein Durchgangsloch (212) umfasst, das zumindest einen Abschnitt der Einstellschraube aufnimmt, und wobei zumindest ein Abschnitt einer unteren Oberfläche der Einstellschraube durch das Durchgangsloch zur Außenseite der elektronischen Vorrichtung hin freiliegt.

10. Elektronische Vorrichtung nach einem der vorstehenden Ansprüche, wobei die Berührungsfeld-Halterung ein metallisches Material umfasst, das mindestens eines von Edelstahl und Aluminium umfasst.

11. Elektronische Vorrichtung nach einem der vorstehenden Ansprüche, wobei die Berührungsfeld-Halterung ein nichtmetallisches Material umfasst, das mindestens eines von Polyethylen, Polypropylen, Acrylnitril-Butadien-Styrol, Polystyrol und/oder Polyamid, Polycarbonat und Glasfaser umfasst.

12. Elektronische Vorrichtung nach einem der vorstehenden Ansprüche, wobei das Berührungsfeld-Modul einen unter der Leiterplatte angeordneten Schalter umfasst.

13. Elektronische Vorrichtung nach einem der vorstehenden Ansprüche, wobei das Berührungsfeld-Modul ein am Gehäuse angeordnetes Stützelement umfasst, das mindestens eine von der Berührungsfeld-Abdeckung und der Leiterplatte stützt.

14. Elektronische Vorrichtung nach einem der vorstehenden Ansprüche, wobei das Gehäuse ein erstes Gehäuse (210), das das Berührungsfeld-Modul aufnimmt, und ein zweites Gehäuse (220) umfasst, das dazu konfiguriert ist, sich in Bezug auf das erste Gehäuse zu drehen, und eine Anzeige (204) aufnimmt.

15. Elektronische Vorrichtung nach einem der vorstehenden Ansprüche, wobei die Einstellschraube mehrere voneinander beabstandete Einstellschrauben umfasst.

## Revendications

1. Dispositif électronique (101), comprenant :
un boîtier (202) ; et
un module de pavé tactile (300) logé dans le boîtier,
dans lequel le module de pavé tactile comprend :
un couvercle de pavé tactile (310) ;
une carte de circuit imprimé (320) disposée sous le couvercle de pavé tactile ;
une vis de réglage (340) au moins partiellement insérée dans le boîtier ;
un support de pavé tactile (330) disposé sur le boîtier, comprenant une zone principale (331) espacée de la carte de circuit imprimé et une zone d'extrémité (332) s'étendant depuis la zone principale et configurée pour entrer en contact avec la carte de circuit imprimé, dans lequel la zone d'extrémité est configurée pour être pliée par rapport à la zone principale sur la base d'un déplacement de la vis de réglage afin de supporter la carte de circuit imprimé et le couvercle de pavé tactile ; et
un composant adhésif (350) positionné entre la carte de circuit imprimé et la zone principale du support de pavé tactile.

2. Dispositif électronique selon la revendication 1, dans lequel la zone d'extrémité comprend une portion de pliage (333), dont au moins une partie est pliée.

3. Dispositif électronique selon la revendication 1 ou 2, dans lequel la vis de réglage comprend une surface supérieure, dont au moins une partie est configurée pour entrer en contact avec au moins une partie de la zone d'extrémité, et une surface inférieure orientée vers un extérieur du dispositif électronique.

4. Dispositif électronique selon l'une quelconque des revendications précédentes, dans lequel la vis de réglage est configurée pour se déplacer dans une direction d'épaisseur du dispositif électronique sur la base d'une force appliquée depuis un extérieur.

5. Dispositif électronique selon l'une quelconque des revendications précédentes, dans lequel le support de pavé tactile comprend une première zone de bord à laquelle le composant adhésif est fixé, et une seconde zone de bord positionnée à l'opposé de la première zone de bord et disposée sensiblement parallèlement à la première zone de bord, et
dans lequel la vis de réglage fait face à au moins une partie de la seconde zone de bord.

6. Dispositif électronique selon l'une quelconque des revendications précédentes, dans lequel le support de pavé tactile présente une forme sensiblement de plaque plane.

7. Dispositif électronique selon l'une quelconque des revendications précédentes, dans lequel la zone principale présente une première largeur (w1), et la zone d'extrémité présente une deuxième largeur (w2) inférieure à la première largeur (w1),
dans lequel la zone d'extrémité est positionnée entre la vis de réglage et la carte de circuit imprimé, et
dans lequel le support de pavé tactile comprend une zone de connexion (334) positionnée entre la zone d'extrémité et la zone principale et présentant une troisième largeur (w3) inférieure à la deuxième largeur de la zone d'extrémité.

8. Dispositif électronique selon la revendication 7,
dans lequel la zone de connexion comprend au moins un motif irrégulier (335).

9. Dispositif électronique selon l'une quelconque des revendications précédentes, dans lequel le boîtier comprend un trou traversant (212) recevant au moins une partie de la vis de réglage, et dans lequel au moins une partie d'une surface inférieure de la vis de réglage est exposée vers un extérieur du dispositif électronique à travers le trou traversant.

10. Dispositif électronique selon l'une quelconque des revendications précédentes, dans lequel le support de pavé tactile comprend un matériau métallique comprenant au moins un élément parmi de l'acier inoxydable ou de l'aluminium.

11. Dispositif électronique selon l'une quelconque des revendications précédentes, dans lequel le support de pavé tactile comprend un matériau non métallique comprenant au moins un élément parmi du polyéthylène, du polypropylène, de l'acrylonitrile-butadiène-styrène, du polystyrène et/ou du polyamide, du polycarbonate ou de la fibre de verre.

12. Dispositif électronique selon l'une quelconque des revendications précédentes, dans lequel le module de pavé tactile comprend un commutateur disposé sous la carte de circuit imprimé.

13. Dispositif électronique selon l'une quelconque des revendications précédentes, dans lequel le module de pavé tactile comprend un composant de support disposé sur le boîtier et supportant au moins un élément parmi le couvercle de pavé tactile ou la carte de circuit imprimé.

14. Dispositif électronique selon l'une quelconque des revendications précédentes, dans lequel le boîtier comprend un premier boîtier (210) recevant le module de pavé tactile et un second boîtier (220) configuré pour tourner par rapport au premier boîtier et recevant un affichage (204).

15. Dispositif électronique selon l'une quelconque des revendications précédentes, dans lequel la vis de réglage comprend une pluralité de vis de réglage espacées les unes des autres.
